# NEW EUROPEAN PATENT SPECIFICATION

(11) **EP 1 786 218 B2**
(45) Date of publication and mention of the opposition decision: **29.08.2012**
(45) Mention of the grant of the patent: 03.06.2009
(21) Application number: 05792210.6
(22) Date of filing: 29.09.2005
(51) Int. Cl.: H04W 4/06

(54) **A METHOD FOR SHORT MESSAGES GROUP DELIVERING**
VERFAHREN ZUR ÜBERTRAGUNG VON GRUPPEN-KURZNACHRICHTEN
PROCEDE POUR LA TRANSMISSION DE MESSAGES COURTS EN GROUPE

(30) Priority: 29.09.2004 CN 200410080395
(43) Date of publication of application: 16.05.2007
(73) Proprietor: Huawei Technologies Co., Ltd., Longgang District, Shenzhen Guangdong 518129 (CN)
(72) Inventor: CHENG, J, Huawei Adm. Bldg, Shenzhen,Guangdong 518129 (CN); CHEN, D., Huawei Adm. Bldg, Shenzhen,Guangdong 518129 (CN)
(74) Representative: Thun, Clemens
(86) International application number: PCT/CN2005/001595
(87) International publication number: WO 2006/034648

(56) References cited:
- EP-A- 1 289 246
- WO-A-02/51187
- WO-A-03/094552
- WO-A1-98/25422
- WO-A1-2005/055631
- WO-A2-01/86975
- WO-A2-01/86975
- WO-A2-99/59355
- CN-A- 1 418 033
- CN-A- 1 452 416
- DE-A1- 10 246 680
- GB-A- 2 327 571
- US-A1- 2003 007 499
- US-B1- 6 289 223
- YI-BING LIN: 'A Multicast Mechanism for Mobile Networks' IEEE COMMUNICATIONS LETTERS vol. 5, no. 11, 01 November 2001, PISCATAWAY, NJ, US, ISSN 1089-7798 XP011010430
- HERMAN CHUNG-HWA RAO ET AL: 'iSMS: An Integration Platform for Short Message Service and IP' IEEE NETWORK vol. 15, no. 2, 01 March 2001, NEW YORK NY US, ISSN 0890-8044 pages 48 - 55, XP011092084

## Description

### Field of the invention

The embodiments of the present invention relate to the field of the short message service, and more particularly to a method for realizing short message group-delivering.

### Background of the invention

Along with the development of wireless communication technology, short message service has been applied gradually into the wireless communication system. Short message service takes No.7 signaling network as its bearing system, the content of a short message is limited within 70 words, i.e. 140 bytes or so, and is mainly sent and received by mobile terminals peer to peer or between a mobile terminal and a communication network.

A mobile network generally includes voice channels and control channels. Although it is a value added service provided by the wireless communication system like voice transmission and fax, short message service does not occupy the voice channels but only delivered via a wireless control channel, which ensures the speediness of delivery and greatly reduces the cost for communication.

When a short message is delivered via a wireless control channel, the storage and forwarding functions are completed via a Short message service Center (SC) in the network side, i.e. the plain text information from the sender is stored in the SC then forwarded to the receiver, which means that even if the receiver can not receive the information instantly because of mobile offline or many other reasons, the system may save and resend the information later at an appropriate time.

There are several conventional methods for short message group-delivering:

Method one: The conventional mobile communication network is used for short message group-delivering. A source user terminal sends a point-to-point short message to each destination user terminal. The detailed process is that: the source user terminal edits a text short message first, and selects phone numbers of destination user terminals by a Man Machine Interface (MMI) from a telephone directory, or directly inputs phone numbers of destination user terminals on a keyboard, and then presses the "YES" or "ENTER" button to deliver this short message. The short message is sent to each destination user terminal based upon the point-to-point short message delivery process.

Actually, the short message with the same contents is delivered for multiple times from a source user terminal to different destination user terminals. In this way, not only the time for delivering short message will be very long, but also radio resources are wasted for sending the short message with the same contents each time.

The conventional digital trunk radio communication system, or, for short, the trunk system may provide powerful trunk dispatching services such as Voice Group Call Service (VGCS) and voice multicast service; a digital trunk system based on Global System for Mobile communications (GSM) can also provide point-to-point short message service, short message cell broadcast service and data services similar to those of the GSM system.

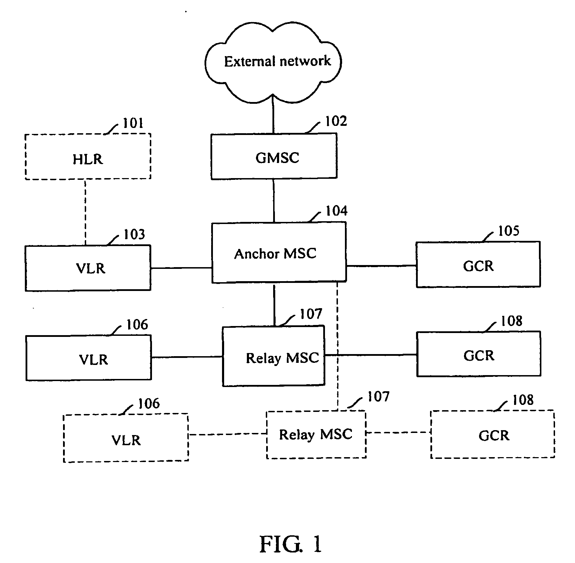

FIG. 1 is a block diagram illustrating the core network structure of a trunk system in the prior art. A Home Location Register (HLR) 101 stores account opening information of a user terminal, which at least includes International Mobile Subscriber Identify (IMSI) of a user terminal and a list of the group IDs the user terminal entitled to use, and each user terminal may be entitled to belong to one or more groups at the same time. A Visitor Location Register (VLR) 103 is used for recording the user terminals located in the current area, copying from HLR 101 the IMSIs of the user terminals and the list of group IDs the user terminals entitled to use, assigning Temporary Mobile Subscriber Identities (TMSIs) for the user terminals located in the area, releasing the information of the user terminals roaming away from the area, and setting the state of the user terminals powering-off or having not updated the location for a long time as IMSI separation. The VLR is connected with a Mobile Switching Center (MSC) and a Group Call Register (GCR) in the area where the VLR is located. An anchor MSC 104, which is responsible for managing and maintaining a specific VGCS, is linked with a Gateway Mobile Switching Center (GMSC) 102 and connected with the GCR 105; the GMSC 102 is connected with external network; the GCR 105 stores the group call attributes including group ID and group call area which are combined as group call reference.

When the group call area exceeds one MSC area, the MSCs controlling cells of a group call area which are not under control of the group call anchor MSC are relay MSCs 107, and the relation between the anchor MSC 104 and the relay MSCs 107 is one-to-multiple in tree shapes. The group call attributes stored in the GCR 105 connected with the anchor MSC 104 includes a list of identities of dispatchers, a list of relay MSCs, and a list of cells controlled directly by the anchor MSC associated with the group call reference; in addition, the group call attributes stored in the GCR 108 connected with anchor MSC 107 includes anchor MSC addresses associated with the group call reference and a list of cells under the control of the relay MSC.

Upon receiving a group call initiating request, the anchor MSC 104 interrogates the group call attributes from the GCR 105 with which the anchor MSC 104 is connected, so as to get the list of identities of dispatchers, the list of relay MSCs of the group, and the list of cells under the control of this MSC; then the anchor MSC 104 calls dispatchers and the relay MSC 107 of the group, establishes group call channels in the cells under the control of the anchor MSC 104, notifies the user terminals in the group about the initiated group call on the Notification Channel (NCH) of each cell and indicates the group channels for group members to listen on.

Upon receiving a group call request from the anchor MSC 104, the relay MSC 107 interrogates the list of cells of the group from the GCR 108 with which the relay MSC 107 is connected, establishes group call channels in the cells, notifies the user terminals in the group about the initiated group call on the NCH and indicates the group channels for group members to listen on.

It may be realized by the trunk system that a call is initiated by a user terminal and simultaneously listened by other user terminals in a group, however, a user terminal in the group of the trunk system can only have the group ID but can not know the information of the group members, such as the user terminal addresses. Therefore it is impossible to use the one-to-multiple short message group-delivering service of the point-to-point delivery technique, thus impossible to solve the problems of repeatedly sending a short message with the same contents to each destination user terminal.

Method 2: a short message cell broadcast technique is used for short message group-delivering.

As a kind of short message service in mobile telecommunication service, cell broadcast short message service collects information by a cell broadcasting center in a certain mode and sending short messages to all receivers in a given area according to a given frequency for a given number of times. The area for a cell broadcast short message service may be one cell or a cluster of cells or even the whole Public Land Mobile Network (PLMN).

A cell broadcast system generally involves Cell Broadcast Entities (CBE), a Cell Broadcast Center (CBC), a Base Station Controller (BSC), Base Stations (BTS), Mobile Stations (MS) and relevant interface units.

A CBE is responsible for submitting the contents of broadcast message and broadcast parameters of the CBE to the CBC; the CBC dispatches messages from different CBEs synthetically according to protocol conventions and then sends an operating command to the BSC; the BSC analyses and stores the command then sends it to the BTS for execution; the BTS makes a flow control of the broadcast short message then sends the message to the destination user terminals. The broadcast information can be continuously showed to the destination user terminals supporting the service, even if the destination user terminals are not in the talking state. A channel identifier number is assigned to each broadcast message to enable a destination user terminal selectively receive the interested messages, and a destination user terminal can shield the contents unconcerned by setting via a mobile terminal.

However, in this way, a group short message should be forwarded by different units in a wireless communication system before to the destination user terminals at last; furthermore, the source user terminal has to request the CBE for short message group-delivering and designate the destination user terminals. Therefore, the entire process for short message group-delivering is rather long with quite a lot radio resources occupied.

US 2005/0141538 A1 discloses a method of transmitting a group message to one or more subscriber devices of a group in a radio communication network. A RNC maintains a Multimedia Broadcast and Multicast Service (MBMS) group including at least one subscriber wishing to receive an MBMS service in a radio cell. By the method, the RNC can know whether or how many subscribers have subscribed to an MBMS group. In this document, no MSC or SC is involved.

Further, US-B1-6,289,223 discloses a method for selective multipoint transmission of short message service messages. A valid subscriber could define a user group of SMS subscribers to which a multipoint SMS transmission is desired. When the user desires to send a multipoint SMS transmission, creation and transmission of such a message would follow in a manner similar to traditional point-to-point SMS broadcasts. In this manner, once the SMS transmission would be executed significantly as a point-to-point SMS transmission. In this document, the SMS is send to destination terminals one bye one.

### Summary of the invention

The embodiment of this invention provides a method for short message group-delivering which not only may shorten the delivery time, but also may save radio resources during short message group-delivering.

The technical solution according to the embodiment of this invention is implemented as follows:

A method for short message group-delivering includes: sending, by a source user terminal, a group short message to a Short message Service Center, SC, on a channel uplink via a Mobile Switching Center, MSC , to which the source user terminal belongs, wherein the group short message includes group short message data and a group ID of a trunk group of destination user terminals; returning, by the SC, a delivery report to the source user terminal via the MSC upon receiving the group short message, determining, by the SC, an anchor MSC associated with the trunk group according to the group ID of the trunk group, and sending the group short message to the anchor MSC; determining, by the anchor MSC, a relay MSC associated with the destination user terminals, sending the group short message on a shared channel downlink via the relay MSC to the destination user terminals in the trunk group; releasing, by the MSC, the channel uplink.

Preferably, when a group call is established in the trunk group, and the source user terminal belongs to the trunk group and is in a group transmit mode, the channel uplink is the group call channel uplink.

Preferably, when a group call is established in the trunk group, and the source user terminal belongs to the trunk group and is in a group receive mode, the method further includes:
before the step of sending by the source user terminal the group short message to the SC on the channel uplink, sending, by the source user terminal, an UPLINK-ACCESS request to the MSC, performing channel uplink contention; and performing the step of sending by the source user terminal the group short message to the SC after the contention succeeds;
the channel uplink is a group-call channel uplink;
the step of releasing by the MSC the channel uplink occupied by the source user terminal is implemented after receiving the release request from the source user terminal.

Preferably, when a group call is not established in the trunk group, the method further includes:
before the step of sending by the source user terminal the group short message to the SC on the channel uplink, sending, by the source user terminal, a channel access request to the MSC; -
assigning, by the MSC, a channel for the source user terminal, establishing a Radio Resource (RR) connection via the assigned channel; acquiring the right to occupy the assigned channel;
the channel uplink is the channel uplink of the assigned channel;
wherein after the step of returning a delivery report to the source user terminal, the MSC directly releases the channel uplink of the assigned channel;
before determining by the anchor MSC the relay MSC, the method further includes:
   establishing, by the anchor MSC, an L2 connection on the assigned channel, sending, on the Notification Channel (NCH) by the relay MSC, a notification message for establishing short message group delivery, the notification message includes the group ID of the trunk group and the assigned channel.

Preferably, the assigned channel may be a Standalone Dedicated Control Channel (SDCCH) for transferring signaling or a group call channel for transferring voice and signaling.

Preferably, the source user terminal belongs to or does not belong to the trunk group.

Preferably, the method further includes:
after sending the group short message to the anchor MSC; returning, by the anchor MSC, to the SC a delivery report after the anchor MSC receives the group short message.

Preferably, the short message further includes an ID of the source user terminal;
after sending the group short message on the channel downlink via the relay MSC to the destination user terminals in the trunk group, the method further includes:
determining whether the ID of the source user terminal is the same as the ID of the destination user terminal; if the ID of the source user terminal is the same as the ID of destination user terminal, refusing to receive the short message, and terminating the process; otherwise, receiving the short message on the channel downlink.

Preferably, the short message further includes the validity time of the group short message;
the SC sends periodically the received short message to the anchor MSC within the validity time according to a preset cycle.

Preferably, the short message further includes version information;
the destination user terminals of the trunk group stores the version information of the short message within the validity time;
after sending the group short message on a channel downlink via the relay MSC to the destination user terminals in the trunk group, the method further includes:
determining, by the destination user terminals, whether the version information included in the group short message is the same as the self-stored version information; if the version information included in the group short message is the same as the self-stored version information, refusing to receive the group short message, and terminating the process; otherwise, receiving the group short message on the channel downlink.

Preferably, the method further includes:
sending periodically, by the anchor MSC, a notification, on the NCH via the relay MSC, of short message group-delivery, and the notification includes the group ID and the version information of the group short message.

Preferably, the group short message includes text information, picture information, media information or any combination thereof.

It can be seen that a trunk group is established; if a group call is established in the trunk group, a group short message may be sent, by the source user terminal belonging to the trunk group, on a channel uplink of the trunk group to an SC, and received from the SC by all destination user terminals in the trunk group on a shared channel downlink; if a group call is not established in the trunk group, the group short message may be sent to an SC on an assigned channel uplink by the source user terminal which may or may not belong to the trunk group, and received from the SC by all destination user terminals in the trunk group on an assigned channel downlink shared by all destination user terminals.

By the method of the embodiment of this invention, it is possible not to perform short message group-delivering in point-to-point mode, or to forward short message by different units in a wireless communication system as in the prior art; and a source user terminal may not request the CBE for short message group-delivering and designate the destination user terminals. Therefore, the time for short message group-delivering can be shortened with less radio resources occupied.

### Brief description of the drawings

FIG. 1 is a block diagram illustrating the core network structure of a trunk system in the prior art.
FIG. 2 is a flowchart illustrating the process of short message group-delivering from a source user terminal to the network with the trunk group call established according to an embodiment of the invention;
FIG. 3 is a flowchart illustrating the process of short message group-delivering from a network to destination user terminals with the trunk group call established according to an embodiment of the invention;
FIG. 4 is a flowchart illustrating the process of short message group-delivering from a source user terminal to the network with the trunk group call not established according to an embodiment of the invention;
FIG. 5 is a flowchart illustrating the process of short message group-delivering from a network to destination user terminals with the trunk group call not established according to an embodiment of the invention;

### Detailed description of the invention

This invention is hereinafter described in detail with reference to the embodiments and the attached drawings.

In an embodiment of the invention, a group is established in advance and the short message group-delivering is carried out based on the conventional trunk system, which may shorten the time for short message group-delivering and occupy less radio resources.

Since the method of the embodiments of the invention is based on the trunk system, short message group-delivering will be carried out in two cases: with a trunk group call not established or already established. The processing methods for the two different cases are described below respectively.

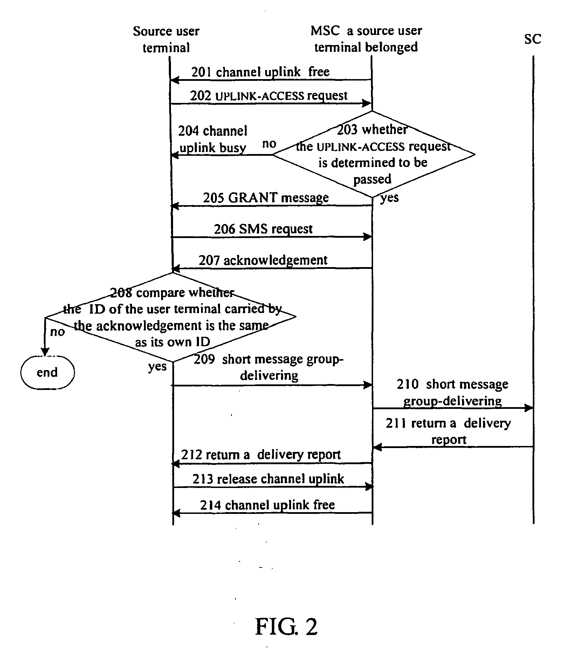

FIG. 2 is a flowchart illustrating the process of short message group-delivering from a source user terminal to a network with the trunk group call already established. In this embodiment, a trunk group call has already been established and a source user terminal to perform short message group-delivering is in a group receive mode.

Step 201: an MSC broadcasts an UPLINK-FREE message on an NCH indicating that the channel uplink is not occupied.

Step 202: after getting a group short message written, the source user terminal makes a request to the MSC for accessing to the group call channel uplink by the Push-To-Talk (PTT) button, i.e. sending the MSC an UPLINK-ACCESS request which includes access references and access reasons.

Step 203: upon receiving the UPLINK-ACCESS request, the MSC gives a verdict on the UPLINK-ACCESS request according to a preset rule; if the UPLINK-ACCESS request is allowable, the process proceeds to step 205 in which an UPLINK-GRANT message is sent to the source user terminal; otherwise, the process proceeds to step 204 in which an UPLINK-BUSY message is sent to the source user terminal.

The verdict is executed according to the conditions preset in the MSC, for example, according to the priority or the time of the request for delivery etc.

If the source user terminal receives an UPLINK-BUSY message, the process terminates; if the source user terminal receives an UPLINK-GRANT message, the process proceeds to step 206.

Step 206: the source user terminal sends to the MSC a CM-SERVICE REQUEST message indicating that the current service is short message group-delivering, and the request contains the ID of the source user terminal for giving a verdict on the channel uplink contention.

Step 207: the MSC establishes an SAPI3 connection after receiving the CM-SERVICE REQUEST message from the source user terminal, and returns to the source user terminal an acknowledgement message containing the ID of the user terminal succeeding in the channel uplink contention.

Step 208: the source user terminal compares whether the ID of the user terminal contained in the received acknowledgement message is the same to the ID of its own; if the two IDs are the same, the process proceeds to step 209; otherwise the process terminates.

In steps 202-208, actually, the channel uplink contention is performed by the source user terminal in a manner as specified for the conventional trunk system.

Step 209: the source user terminal sends to the MSC a group short message which includes a group ID and group short message data and may further include the ID of the source user terminal, the validity time and the version number of the group short message.

Step 210: the MSC forwards the received group short message to an SC.

Step 211-212: upon receiving the group short message, the SC returns to the source user terminal, via the MSC, a delivery report message indicating whether the group short message is received by the SC.

Step 215-216: the source user terminal sends an UPLINK-RELEASE message to the MSC for releasing the trunk group channel uplink, and then turns to a group receive mode; after releasing the channel uplink occupied by the source user terminal, the MSC broadcasts in the trunk group an UPLINK-FREE message on the NCH; meanwhile, a corresponding message is showed on the source user terminal according to the received delivery report message indicating whether the group short message is received by the SC.

Till now, the group short message is sent to the SC from the source user terminal.

In the foregoing embodiment, the source user terminal is in the group receive mode; it is obviously that the source user terminal also may be a speaker in the current group, i.e., in the group transmit mode, then the process may directly be performed from step 206 on without performing the preceding steps for the source user terminal has have the right to use the channel uplink.

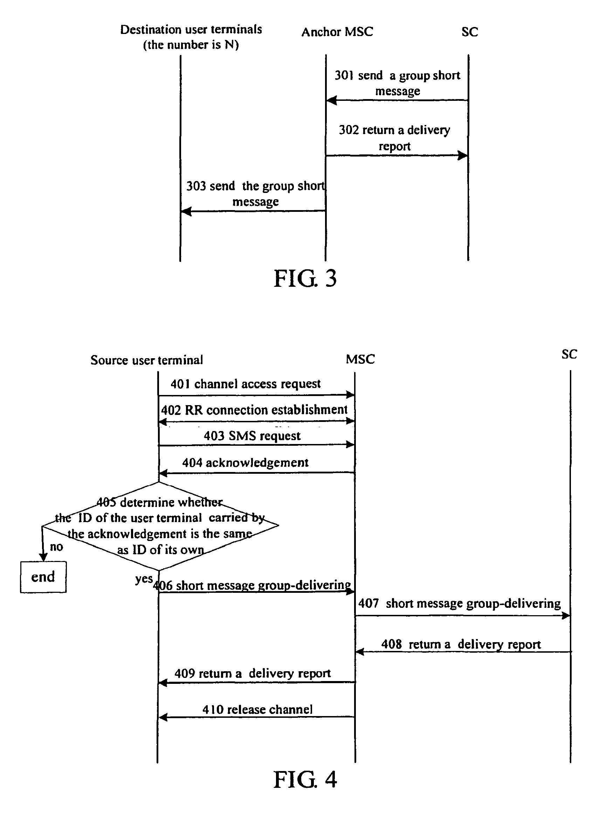

FIG. 3 is a flowchart illustrating the process of short message group-delivering from a network to destination user terminals with the trunk group call already established according to an embodiment of the invention. The number of the destination user terminals is N.

Step 301: upon receiving the group short message forwarded by the MSC, the SC analyses the group short message; after determining that it is a group short message according to the trunk group ID included in the group short message, the SC interrogates from a GCR an anchor MSC associated with the trunk group and forwards the group short message to the anchor MSC.

Step 302-303: the anchor MSC returns a delivery report message to the SC after receiving the group short message from the SC. In addition, the anchor MSC sends the group short message, on the group call channel, to a destination user terminal in the trunk group via a relay MSC associated with the trunk group, and the group short message including the group ID, the ID of the source user terminal, the version number, the text contents, the validity time of the short message; and the destination user terminal in the trunk group receives the group short message on the channel downlink of the trunk group.

The destination user terminal may not reply after receiving the group short message. Till now, the group short message is delivered to a destination user terminal by the network.

Within a validity time of the group short message, the SC periodically sends the group short message with the same contents via the anchor MSC according to a preset delivery cycle, which means that steps 301-303 are repeatedly performed within the validity time.

FIG 4 is a flowchart illustrating the process of short message group-delivering from a source user terminal to a network with the trunk group call not established according to an embodiment of the invention. In this embodiment, the trunk group call has not been established yet, and a source user terminal to perform short message group-delivering is in a FREE mode. In this case, the source user terminal may be or may not be a member of the trunk group pre-established.

Step 401: a source user terminal sends a channel access request, i.e. a CHANNEL-REQUEST message to ask for establishing a Radio Resource (RR) connection with the MSC on the network side.

Step 402: after receiving the request, the MSC assigns a Standalone Dedicated Control Channel (SDCCH) used to transfer signaling for the source user terminal as a short message group call channel, and transmits a command for immediate assignment, and the RR connection is established between the source user terminal and the MSC.

During RR connection establishment, the process may include as well that the source user terminal sends a CM-SERVICE REQUEST message with a Type of Service (TOS) of group short message service indicated, and the process may further include authentication and ciphering procedures, and the process may still include an operation for verdict on the channel uplink contention.

Step 403: the source user terminal sends to the network on the assigned SDCCH an SAPI3 required message containing the ID of the source user terminal by using a Set Asynchronous Balanced Model (SABM) frame.

Step 404: upon receiving the SAPI3 required message from the source user terminal, the MSC establishes an SAPI3 connection and returns to the source user terminal an acknowledgement message containing the ID of the user terminal succeeded in the channel uplink contention.

Step 405: the source user terminal compares whether the ID of the user terminal contained in the acknowledgement message is the same as the ID of its own; if the two IDs are the same, the right of using the channel uplink is obtained; otherwise, the process terminates.

Step 406: the source user terminal sends to the MSC on the assigned SDCCH channel uplink a group short message which contains the group ID and group short message text data and may further contain the ID of the source user terminal, the validity time and the version number of the group short message.

Step 407: the MSC forwards the received group short message to the SC.

Step 408-409: after receiving the group short message forwarded by the MSC, the SC analyses the group short message; after determining according to the ID contained in the group short message that it is a group short message, the SC returns to the source user terminal via the MSC a delivery report message indicating whether the group short message is received by the SC; meanwhile, a corresponding message is showed on the source user terminal according to the received delivery report message.

Step 410: the MSC sends a CHANNEL-RELAESE message to the source user terminal to release the SDCCH channel uplink.

Within a validity time of the group short message, the SC periodically deliveries the group short message with the same contents via the anchor MSC according to a preset delivery cycle.

Till now, the group short message is delivered to the SC by the source user terminal.

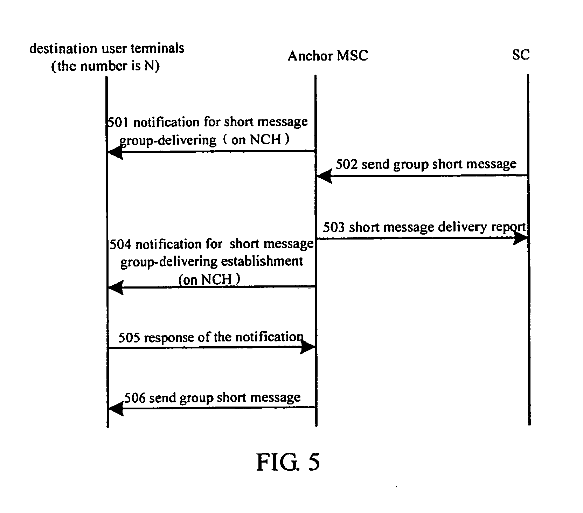

FIG 5 is a flowchart illustrating the process of short message group-delivering from a network to destination user terminals with the trunk group call not established according to an embodiment of the invention. The number of the destination user terminals is N.

Step 501: the anchor MSC periodically sending on the NCH via the relay MSC associated with the trunk group a notification of the short message group-delivering including a group ID and a version number of a group short message.

Step 502: upon receiving the group short message forwarded by the MSC, the SC analyses the group short message; after determining according to the trunk group ID contained in the group short message that it is a group short message, the SC interrogates the anchor MSC associated with the trunk group from a GCR and forwards the group short message to the anchor MSC.

Step 503-504. upon receiving the group short message, the anchor MSC returns a delivery report message to the SC, and assigns an SDCCH channel on the network, establishes an L2 connection, and then sends a notification message on the NCH via the relay MSC associated with the trunk group for establishing short message group-delivering, and the notification message includes the trunk group ID and the SDCCH channel.

Step 505: the destination user terminal responds to the notification.

Step 506: once receiving a response from one destination user terminal, the anchor MSC sends the group short message from the SC on the established SDCCH channel downlink via the relay MSC associated with the trunk group.

The destination user terminal may not reply after receiving the group short message. Till now, the group short message is delivered to a destination user terminal by the network.

Within the validity time of the group short message, the SC periodically delivers the group short message with the same contents by the anchor MSC according to a preset delivery cycle, which means that steps 501-506 are repeatedly performed within the validity time.

When the trunk group call is not established, the channel assigned by the MSC may be an SDCCH for transferring signaling, or may be a group call channel for transferring voice and signaling; if the channel is the latter, just replace the SDCCH with the group call channel for transferring voice and signaling. As the resources occupied by the group call channel are surely more than those occupied by the SDCCH, it is the SDCCH that is usually assigned instead of the group call channel for transferring voice and signaling when the group call is not established. Because fewer resources are occupied by a short message service and sufficient resources could be provided by the SDCCH.

In any of the above cases, after a destination user terminal receives a group short message on a channel downlink, the process may further include: analyzing the received group short message first; if the destination user finds that the version number of the group short message is the same to the version number of the short message stored in itself, i.e., the version number of the group short message is found to exist already, refusing to receive the group short message. Therefore, it is necessary for the destination user terminal to store the version number of the received group short message within the validity time even if the group short message is deleted. Once the validity time expires, the destination user terminal automatically deletes the version number. In this way, it is assured that, even though the SC repeatedly sends a group short message within the validity time, the destination user terminal only receive the same group short message once.

After the source user terminal receives the group short message, the process may further includes: analyzing the group short message; if the source user terminal finds that the ID of the source user terminal is the same to the ID of its own, refusing to receive the group short message. In this way, the source user terminal may be prevented from receiving the group short message sent by itself.

The information contained in the group short message according to the embodiments of this invention includes: text information, picture information, media information or any combination thereof.

By the method of the embodiments, short message group-delivering may be performed in a trunk group expediently and speedily no matter whether a trunk group call has been established. In addition, when the trunk group call has not been established, the source user terminal for short message group-delivering may be or may not be a member of the trunk group.

The foregoing statement is only the preferred embodiments of the present invention and is not intended to limit the scope of the present invention.

## Claims

1. A method for short message group-delivering, comprising:
Sending (209, 210; 406, 407), by a source user terminal, a group short message to a Short message Service Center, SC, on a channel uplink via a Mobile Switching Center ,MSC (102), to which the source user terminal belongs, wherein the group short message includes group short message data and a group ID of a trunk group of destination user terminals;
returning (211, 212; 408, 409), by the SC, a delivery report to the source user terminal via the MSC (102) upon receiving the group short message;
determining, by the SC, an anchor MSC (104) associated with the trunk group according to the group ID of the trunk group, and sending (301) the group short message to the anchor MSC (104);
determining, by the anchor MSC (104), a relay MSC (107) associated with the destination user terminals, sending (303, 506) the group short message on a shared channel downlink via the relay MSC (107) to the destination user terminals in the trunk group;
releasing, by the MSC, the channel uplink.

2. The method of Claim 1, wherein when a group call is established in the trunk group and the source user terminal belongs to the trunk group and is in a group transmit mode, the channel uplink is the group call channel uplink.

3. The method of Claim 1, wherein when a group call is established in the trunk group and the source user terminal belongs to the trunk group and is in a group receive mode, the method further comprises:
before the step of sending (209, 210) by the source user terminal the group short message to the SC on the channel uplink, sending (202), by the source user terminal, an UPLINK-ACCESS request to the MSC, performing channel uplink contention;
wherein the channel uplink is the group call channel uplink.

4. The method of Claim 1, wherein when a group call is not established in the trunk group, the method further comprises:
before the step of sending (406, 407) by the source user terminal the group short message to the SC on the channel uplink, sending (401), by the source user terminal, a channel access request to the MSC ;
assigning, by the MSC, a channel for the source user terminal, establishing (402) a Radio Resource ,RR, connection via the assigned channel; acquiring the right to occupy the assigned channel;
wherein the channel uplink is the channel uplink of the assigned channel;
before determining by the anchor MSC (104) the relay MSC (107), the method further comprises:
establishing, by the anchor MSC (104), an L2 connection on the assigned channel, sending, on the Notification Channel, NCH, by the relay MSC (107), a notification message for establishing short message group-delivering, the notification message includes the group ID of the trunk group and the assigned channel.

5. The method of Claim 4, wherein the assigned channel comprises one of a Standalone Dedicated Control Channel, SDCCH, for transferring signaling and a group call channel for transferring voice and signaling.

6. The method of Claim 5, wherein the source user terminal belongs to or does not belong to the trunk group.

7. The method of any one of Claims 1 to 4, further comprising:
after sending the group short message to the anchor MSC (104), returning (302, 503), by the anchor MSC (104), to the SC a delivery report after the anchor MSC (104) receives the group short message.

8. The method of Claim 2, 3 or 6, wherein the group short message further comprises an ID of the source user terminal;
after sending (303, 506) the group short message on the channel downlink via the relay MSC (107) to the destination user terminals in the trunk group, the method further comprises:
determining whether the ID of the source user terminal is the same as the ID of the destination user terminal; if the ID of the source user terminal is the same as the ID of the destination user terminal, refusing to receive the group short message, and terminating the process; otherwise, receiving the group short message on the channel downlink.

9. The method of Claim 8, wherein the group short message further comprises validity time of the group short message; and
the SC sends periodically the received group short message to the anchor MSC (104) within the validity time according to a preset cycle.

10. The method of Claim 9, wherein the group short message further comprises version information;
the destination user terminals of the trunk group stores the version information of the group short message within the validity time;
after sending (303, 506) the group short message on the channel downlink via the relay MSC (107) to the destination user terminals in the trunk group, the method further comprises:
determining, by the destination user terminals, whether the version information comprised in the group short message is the same as version information stored in itself; if the version information comprised in the group short message is the same as the version information stored in itself, refusing to receive the group short message, and terminating the process; otherwise, receiving the group short message on the channel downlink.

11. The method of Claim 10, further comprising:
sending periodically, by the anchor MSC (104), a notification on the NCH via the relay MSC (107), of short message group-delivering, and the notification comprises the group ID and the version information of the group short message.

12. The method of Claim 1, wherein the group short message comprises at least one of: text information, picture information and media information.

## Patentansprüche

1. Verfahren zur Übertragung einer Gruppen-Kurznachricht, das Folgendes umfasst:
durch ein Ursprungs-Benutzerterminal Senden (209, 210; 406, 407) einer Gruppen-Kurznachricht an ein Kurznachrichten-Service-Zentrum, SC, auf einem Uplink-Kanal über eine mobile Vermittlungszentrale, MSC (102), zu der das Ursprungs-Benutzerterminal gehört, wobei die Gruppen-Kurznachricht Daten bezüglich der Gruppen-Kurznachricht und eine Gruppen-ID einer Stammgruppe von Ziel-Benutzerterminals umfasst;
Zurücksenden (211, 212; 408, 409) eines Übertragungsberichts durch das SC über die MSC (102) an das Ursprungs-Benutzerterminal nach Empfangen der Gruppen-Kurznachricht;
durch das SC Bestimmen einer Anker-MSC (104), die mit der Stammgruppe gemäß der Gruppen-ID der Stammgruppe verbunden ist, und Senden (301) der Gruppen-Kurznachricht an die Anker-MSC (104);
durch die Anker-MSC (104) Bestimmen einer Weiterleitungs-MSC (107), die mit den Ziel-Benutzerterminals verbunden ist, Senden (303, 506) der Gruppen-Kurznachricht auf einem gemeinsamen Downlink-Kanal über die Weiterleitungs-MSC (107) an die Ziel-Benutzerterminals in der Stammgruppe;
Freigeben des Uplink-Kanals durch die MSC.

2. Verfahren nach Anspruch 1, wobei, wenn ein Gruppenruf in der Stammgruppe aufgebaut ist und das Ursprungs-Benutzerterminal zu der Stammgruppe gehört und in einem Gruppen-Übertragungsmodus ist, der Uplink-Kanal der Gruppenruf-Uplink-Kanal ist.

3. Verfahren nach Anspruch 1, wobei, wenn ein Gruppenruf in der Stammgruppe aufgebaut ist und das Ursprungs-Benutzerterminal zu der Stammgruppe gehört und in einem Gruppen-Empfangsmodus ist, das Verfahren ferner Folgendes umfasst:
vor dem Schritt des Sendens (209, 210) der Gruppen-Kurznachricht an das SC auf dem Uplink-Kanal durch das Ursprungs-Benutzerterminal, Senden (202) durch das Ursprungs-Benutzerterminal einer Uplink-Zugriffs-Anfrage an die MSC, die eine Uplink-Kanal-Konkurrenz durchführt;
wobei der Uplink-Kanal der Gruppenruf-Uplink-Kanal ist.

4. Verfahren nach Anspruch 1, wobei, wenn ein Gruppenruf nicht in der Stammgruppe aufgebaut ist, das Verfahren ferner Folgendes umfasst:
vor dem Schritt des Sendens (406, 407) der Gruppen-Kurznachricht an das SC auf dem Uplink-Kanal durch das Ursprungs-Benutzerterminal, Senden (401) einer Kanal-Zugriffs-Anfrage durch das Ursprungs-Benutzerterminal an die MSC;
Zuordnen eines Kanals für das Ursprungs-Benutzerterminal durch die MSC, Aufbauen (402) einer Funkressourcen-Verbindung (RR-Verbindung) über den zugeordneten Kanal; Erwerben des Rechts, den zugeordneten Kanal zu belegen;
wobei der Uplink-Kanal der Uplink-Kanal des zugeordneten Kanals ist;
wobei das Verfahren vor dem Bestimmen der Weiterleitungs-MSC (107) durch die Anker-MSC (104) ferner Folgendes umfasst:
Aufbauen einer L2-Verbindung auf dem zugeordneten Kanal durch die Anker-MSC (104), Senden einer Notifikationsnachricht auf dem Notifikations-Kanal, NCH, durch die Weiterleitungs-MSC (107), um die Übertragung der Gruppen-Kurznachricht aufzubauen, wobei die Notifikationsnachricht die Gruppen-ID der Stammgruppe und den zugeordneten Kanal umfasst.

5. Verfahren nach Anspruch 4, wobei der zugeordnete Kanal einen Standalone-Dedicated-Control-Kanal, SDCCH, zur Signalübertragung oder einen Gruppenruf-Kanal zur Sprach- und Signalübertragung umfasst.

6. Verfahren nach Anspruch 5, wobei das Ursprungs-Benutzerterminal zu der Stammgruppe gehört oder nicht.

7. Verfahren nach einem der Ansprüche 1 bis 4, ferner umfassend:
nach dem Senden der Gruppen-Kurznachricht an die Anker-MSC (104), Zurücksenden (302, 503) eines Übertragungsberichts durch die Anker-MSC (104) an das SC, nachdem die Anker-MSC (104) die Gruppen-Kurznachricht empfängt.

8. Verfahren nach Anspruch 2, 3 oder 6, wobei die Gruppen-Kurznachricht ferner eine ID des Ursprungs-Benutzerterminals umfasst;
nach dem Senden (303, 506) der Gruppen-Kurznachricht auf dem Downlink-Kanal über die Weiterleitungs-MSC (107) an die Ziel-Benutzerterminals in der Stammgruppe das Verfahren ferner Folgendes umfasst:
Bestimmen, ob die ID des Ursprungs-Benutzerterminals die gleiche ist wie die ID des Ziel-Benutzerterminals; falls die ID des Ursprungs-Benutzerterminals die gleiche ist wie die ID des Ziel-Benutzerterminals, Verweigern des Empfangs der Gruppen-Kurznachricht und Beenden des Vorgangs; andernfalls, Empfangen der Gruppen-Kurznachricht auf dem Downlink-Kanal.

9. Verfahren nach Anspruch 8, wobei die Gruppen-Kurznachricht ferner eine Gültigkeitsdauer der Gruppen-Kurznachricht umfasst; und das SC periodisch die empfangene Gruppen-Kurznachricht an die Anker-MSC (104) innerhalb der Gültigkeitsdauer gemäß einem voreingestellten Zyklus sendet.

10. Verfahren nach Anspruch 9, wobei die Gruppen-Kurznachricht ferner Versionsangaben umfasst;
die Ziel-Benutzerterminals der Stammgruppe die Versionsangaben der Gruppen-Kurznachricht innerhalb der Gültigkeitsdauer speichern;
nach dem Senden (303, 506) der Gruppen-Kurznachricht auf dem Downlink-Kanal über die Weiterleitungs-MSC (107) an die Ziel-Benutzerterminals in der Stammgruppe das Verfahren ferner Folgendes umfasst:
Bestimmen durch die Ziel-Benutzerterminals, ob die Versionsangaben, die in der Gruppen-Kurznachricht umfasst sind, die gleichen sind wie die Versionsangaben, die in ihnen selbst gespeichert sind; falls die Versionsangaben, die in der Gruppen-Kurznachricht umfasst sind, die gleichen sind wie die Versionsangaben, die in ihnen selbst gespeichert sind, Verweigern des Empfangs der Gruppen-Kurznachricht und Beenden des Vorgangs; andernfalls Empfangen der Gruppen-Kurznachricht auf dem Downlink-Kanal.

11. Verfahren nach Anspruch 10, ferner umfassend:
durch die Anker-MSC (104) periodisches Senden einer Notifikation auf dem NCH über die Weiterleitungs-MSC (107) über die Übertragung der Gruppen-Kurznachricht, und die Notifikation umfasst die Gruppen-ID und die Versionsangaben der Gruppen-Kurznachricht.

12. Verfahren nach Anspruch 1, wobei die Gruppen-Kurznachricht Textangaben, Bildangaben und/oder Medienangaben umfasst.

## Revendications

1. Procédé pour la transmission de messages courts en groupe, comprenant:
envoyer (209, 210; 406, 407), par un terminal utilisateur source, un message court en groupe à un Centre de Service de Messages Courts, SC, sur une liaison ascendante de canal par un Centre de Commutation Mobile, MSC (102), auquel le terminal utilisateur source appartient, où un message court en groupe comprend des données de message court en groupe et une ID de groupe d'un faisceau de terminaux utilisateurs de destination;
retourner (211, 212; 408, 409), par le SC, un rapport de transmission au terminal utilisateur source par le MSC (102), lors de la réception du message court en groupe;
déterminer, par le SC, un ancrage MSC (104) associé au faisceau selon la ID de groupe du faisceau, et envoyer (301) le message court en groupe à l'ancrage MSC (104);
déterminer, par l'ancrage MSC (104), un relais MSC (107) associé aux terminaux utilisateurs de destination, envoyer (303, 506) le message court en groupe sur une liaison descendante de canal par le relais MSC (107) aux terminaux utilisateurs de destination dans le faisceau;
libérer, par le MSC, la liaison ascendante de canal partagée.

2. Procédé selon la revendication 1, dans lequel, lorsqu'un appel en groupe est établi dans le faisceau et que le terminal utilisateur source appartient au faisceau et se trouve en mode de transmission en groupe, la liaison ascendante de canal est une liaison ascendante de canal d'appel en groupe.

3. Procédé selon la revendication 1, dans lequel, lorsqu'un appel en groupe est établi dans le faisceau et que le terminal utilisateur source appartient au faisceau et se trouve en mode de réception en groupe, le procédé comprend en outre:
avant l'étape d'émission (209, 210) par le terminal utilisateur source du message court en groupe au SC sur la liaison ascendante de canal, envoyer (202), par le terminal utilisateur source, une requête de LIAISON ASCENDANTE-ACCES au MSC, exécuter une contention de la liaison ascendante de canal;
où la liaison ascendante de canal est une liaison ascendante de canal d'appel en groupe.

4. Procédé selon la revendication 1, dans lequel, lorsqu'un appel de groupe n'est pas établi dans le faisceau, le procédé comprend en outre:
avant l'étape d'émission (406, 407) par le terminal utilisateur source du message court en groupe au SC sur la liaison ascendante de canal, envoyer (401), par le terminal utilisateur source, une requête d'accès de canal au MSC;
attribuer, par le MSC, un canal pour le terminal utilisateur source, établir (402) une connection de ressource radio, RR, par le canal attribué; acquérir le droit d'occuper le canal attribué;
où la liaison ascendante de canal est la liaison ascendante de canal du canal attribué;
avant la détermination par l'ancrage MSC (104) du relais MSC (107), le procédé comprend en outre:
établir, par l'ancrage MSC (104), une connection L2 du canal attribué, envoyer, sur le canal de notification, NCH, par le relais MSC (107), un message de notification pour établir une transmission de messages courts en groupe, le message de notification comprend la ID de groupe du faisceau et le canal attribué.

5. Procédé selon la revendication 4, dans lequel le canal attribué comprend un d'un Canal de Contrôle Dédié Autonome, SDCCH, pour transférer une signalisation et un canal d'appel en groupe pour transférer la voix et la signalisation.

6. Procédé selon la revendication 5, dans lequel le terminal utilisateur source appartient ou n'appartient pas au faisceau.

7. Procédé selon l'une quelconque des revendications 1 à 4, comprenant en outre:
après l'envoi du message court en groupe à l'ancrage MSC (104), retourner (302, 503), par l'ancrage MSC (104), au SC un rapport de transmission après que l'ancrage MSC (104) a reçu le message court en groupe.

8. Procédé selon la revendication 2, 3 ou 6, où le message court en groupe comprend en outre une ID du terminal utilisateur source;
après l'envoi (303, 506) du message court en groupe sur la liaison descendante de canal par le relais MSC (107) aux terminaux utilisateurs de destination dans le faisceau, le procédé comprend en outre:
déterminer si la ID du terminal utilisateur source est la même que la ID du terminal utilisateur de destination, si la ID du terminal utilisateur source est la même que la ID du terminal utilisateur de destination, refuser la réception du message court en groupe, et terminer le processus; sinon recevoir le message court en groupe sur la liaison descendante de canal.

9. Procédé selon la revendication 8, où le message court en groupe comprend en outre le temps de validité du message court en groupe; et
le SC transmet périodiquement le message court en groupe reçu à l'ancrage MSC (104) à l'intérieur du temps de validité selon un cycle préétabli.

10. Procédé selon la revendication 9, où le message court en groupe comprend en outre une information de version;
les terminaux utilisateurs de destination du faisceau stockent les informations de version du message court en groupe dans le temps de validité; après l'envoi (303, 506) du message court en groupe sur la liaison descendante de canal par le relais MSC (107) aux terminaux utilisateurs de destination dans le faisceau, le procédé comprend en outre:
déterminer, par les terminaux utilisateurs de destination, si l'information de version comprise dans le message court en groupe est la même que l'information de version stockée en elle-même; si l'information de version comprise dans le message court en groupe est la même que l'information de version stockée en elle-même, refuser la réception du message court en groupe et terminer le processus; sinon recevoir le message court en groupe sur la liaison descendante de canal.

11. Procédé selon la revendication 10, comprenant en outre:
envoyer périodiquement, par l'ancrage MSC (104), une notification sur le NCH par le relais MSC (107), d'une transmission en groupe de messages courts, et la notification comprend la ID de groupe et l'information de version du message court en groupe.

12. Procédé selon la revendication 1, où le message court en groupe comprend au moins une de: information texte, information image et information support.
